**Europäisches Patentamt**

**European Patent Office**

**Office européen des brevets**

(19)

(11) Veröffentlichungsnummer: **0 148 995**

**B1**

(12)

# EUROPÄISCHE PATENTSCHRIFT

(45) Veröffentlichungstag der Patentschrift: **23.05.90**

(51) Int. Cl.⁵: **G 06 F 11/16, B 61 L 1/20**

(21) Anmeldenummer: **84110349.2**

(22) Anmeldetag: **30.08.84**

(54) **Schaltungsanordnung zum Prüfen des ordnungsgerechten Anlaufens eines zweikanaligen Fail-Safe-Mikrocomputerschaltwerkes, insbesondere für Eisenbahnsicherungsanlagen.**

(30) Priorität: **12.09.83 DE 3332802**

(43) Veröffentlichungstag der Anmeldung:
**24.07.85 Patentblatt 85/30**

(45) Bekanntmachung des Hinweises auf die
Patenterteilung:
**23.05.90 Patentblatt 90/21**

(84) Benannte Vertragsstaaten:
**AT BE CH DE FR GB IT LI LU NL SE**

(56) Entgegenhaltungen:
**EP-A-0 075 278
DE-A-2 636 352
FR-A-2 512 978
US-A-4 096 990**

**INTERNATIONAL CONFERENCE ON RAILWAYS
IN THE ELECTRONIC AGE, 17.-20. November
1981, Seiten 164-168, IEE, London, GB; K.-H.
WOBIG: "Fail-safe microcomputer systems for
railway signalling - problems and possibilities"**

(73) Patentinhaber: **Siemens Aktiengesellschaft
Wittelsbacherplatz 2
D-8000 München 2 (DE)**

(72) Erfinder: **Gronemeyer, Michael, Dipl.-Ing.
Broitzemer Strasse 256
D-3300 Braunschweig (DE)**
Erfinder: **Scharfenberg, Georg, Dipl.-Ing.
Kiefelhorn 4
D-3308 Königslutter (DE)**

Courier Press, Leamington Spa, England.

**Beschreibung**

Die Erfindung bezieht sich auf eine Schaltungsanordnung zum Prüfen des ordnungsgerechten Anlaufens eines zweikanaligen Fail-Safe-Mikrocomputerschaltwerkes, insbesondere für Eisenbahnsicherungsanlagen, mit in zwei Kanälen dieselben Informationen verarbeitenden Mikrocomputern, deren Signale Bit für Bit in einer Vielzahl von Vergleichern geprüft werden, wobei nur bei vollständiger, dauernder Ordnungsmäßigkeit aller Bit-Paare kein Abschaltvorgang ausgelöst wird, und Speicher für Prüfprogramme vorgesehen sind, die mindestens im Zeitraum des Anlaufens des Mikrocomputerschaltwerkes zu Testzwecken eingesetzt sind.

Bei technischen Prozessen mit Sicherheitsverantwortung, beispielsweise bei der Überwachung und Steuerung von Kernreaktoren oder bei Eisenbahnsicherungsanlagen, wird nach einem anerkannten sicherungstechnischen Prinzip gearbeitet, wodurch bei technischen Fehlern, mit denen beim Betrieb von nichtsicheren Datenverarbeitungsanlagen gerechnet werden muß, der zu steuernde Prozeß in einen für den Menschen und für das Material unkritischen Zustand überführt wird. Dies kann dadurch erreicht werden, daß allen prozeßaktivierenden Informationen spezielle Signale, z.B. hoher Signalpegel, Wechselsignale, zugeordnet werden, die bei einer erkannten technischen Störung der Datenverarbeitungsanlage auf allen Ausgabekanälen in ein unkritisches Signal, z.B. null Volt, überführt werden.

Ein Mikrocomputerschaltwerk der oben angegebenen Art, welches der erläuterten Sicherheitsphilosophie genügt, ist aus der Fachzeitschrift "Elektronische Rechenanlagen" 22. Jahrgang 1980, Heft 5, Seiten 229 bis 236 bekannt. Dieses bewährte Mikrocomputerschaltwerk ist aus zwei parallel dieselben Informationen verarbeitenden Mikrocomputern aufgebaut und wird so betrieben, daß nach einer festgestellten Ungleichheit beider Kanäle die Aktivitäten der Mikrocomputer unterdrückt werden. Dies kann entweder durch ein Zurückhalten der die beiden Mikroprozessoren treibenden Taktpulse oder durch unmittelbares Abschalten von Ausgangssignalumsetzern erfolgen.

Das zweikanalige Fail-Safe-Mikrocomputerschaltwerk erfüllt in vorteilhafter Weise die Forderung nach einer kurzen Defekt-Offenbarungszeit zum einen dadurch, daß in dem Schaltwerk nach jedem einen Verarbeitungsschritt charakterisierenden Taktimpuls die Zustände beider Computerzweige miteinander verglichen werden, so daß der nächste Verarbeitungsschritt nur in Abhängigkeit vom positiven Gesamtergebnis dieses Vergleichsvorganges ausgelöst werden kann; zum anderen sind spezielle Prüfprogramme vorgesehen.

Eingehende Überlegungen haben jedoch im Ergebnis gezeigt daß die gewünschte Fehleroffenbarung unter bestimmten Voraussetzungen in der Anlaufphase des zweikanaligen Mikrocomputerschaltwerkes u.U. nicht gewährleistet sein kann.

Der Erfindung liegt somit die Aufgabe zugrunde, ein zweikanaliges Mikrocomputerschaltwerk der eingangs genannten Art durch eine Zusatzschaltung so weiterzubilden, daß im Falle des Anlaufens des Mikrocomputerschaltwerkes mit identisch falschen Daten und/oder Adressen auch dieser Fehler im Rahmen der gewünschten kurzen Defekt-Offenbarungszeit erkannt wird und zu einem Abschaltvorgang führt.

Erfindungsgemäß wird die Aufgabe dadurch gelöst, daß nach dem Anlaufen des Mikrocomputerschaltwerkes mindestens die für einen Vergleicher von dem einen Kanal vorgesehene Information auf einer fest vorgegebenen Anzahl aufeinanderfolgender Verarbeitungsschritte per Prüfprogramm invertiert über einen steuerbaren Inverter zugeführt sind, und daß Schaltmittel vorgesehen sind, die zu Beginn der vorgegebenen Anzahl von Verarbeitungsschritten den Inverter wirksam schalten und nach der vorgegebenen Anzahl von Verarbeitungsschritten wieder unwirksam schalten.

Hiermit ist es in vorteilhafter Weise möglich, den richtigen Anlauf des Mikrocomputerschaltwerkes mit ordnungsgerechten Anfangsadressen für die beiden Mikroprozessoren sicherzustellen, wobei der Vergleich beispielsweise an mindestens einem Datenbitpaar der beiden Datenbusse erfolgen kann. Zu dem Zweck wird ein Datenbit der ersten verglichenen Daten z.B. im Speicher per Prüfprogramm eines Kanals invertiert, und zwar auf einer vorgegebenen Anzahl aufeinanderfolgender Verarbeitungsschritte.

Da die Realisierung der zusätzlichen Hardware-Schaltung ebenfalls ausschließlich mit handelsüblichen Bausteinen der Digitaltechnik erfolgen kann und die zusätzliche Schaltung besonders aufwandsarm ist, bereichert die erfindungsgemäße Lösung das Mikrocomputerschaltwerk in besonders hohem Maße.

Eine bevorzugte Ausbildung der erfindungsgemäßen Schaltungsanordnung sieht vor, daß dem Vergleicher als steuerbarer Inverter ein Exclusiv-ODER-Glied zugeordnet ist, von dem ein Eingang mit dem Ausgang eines die vorgegebene Anzahl von Verarbeitungsschritten bestimmenden Zählers verbunden ist, der bei einem für mehrere Schaltungsteile des Mikrocomputerschaltwerkes vor dem Anlaufen vorgesehenen Rücksetzsignal einschaltbar und durch die die Verarbeitungsschritte charakterisierenden Taktimpulse fortschaltbar ist.

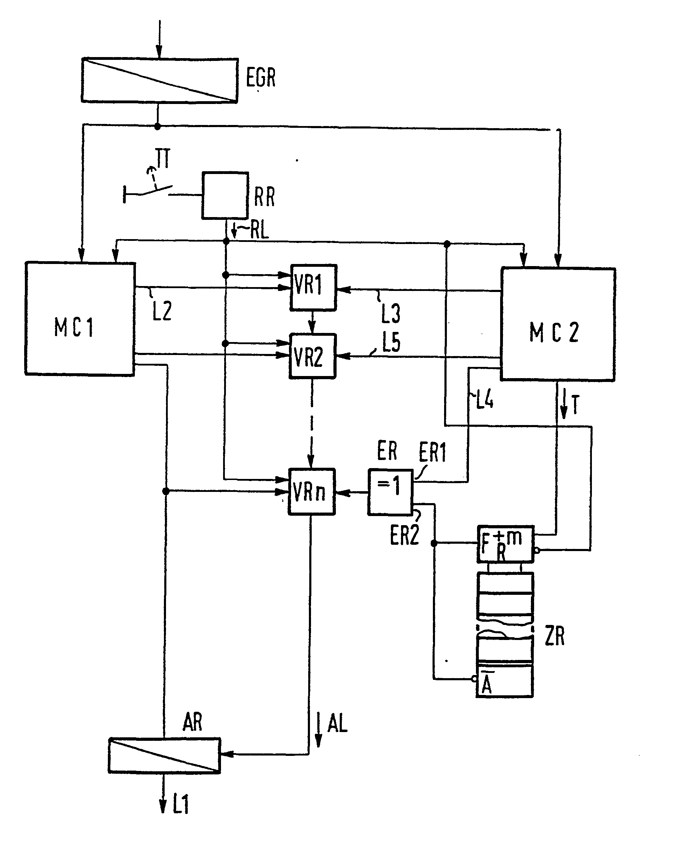

Ein Ausführungsbeispiel der Erfindung ist in der Zeichnung dargestellt und wird nachfolgend erläutert.

Die Zeichnung zeigt im Blockschaltbild ein zweikanaliges Fail-Safe-Mikrocomputerschaltwerk mit zwei Mikrocomputern MCl und MC2. Dieses Mikrocomputerschaltwerk möge zur Steuerung des Betriebes bei Eisenbahnsicherungsanlagen eingesetzt werden. Symbolisch für eine Vielzahl von Eingängen ist ein Eingangssignalumsetzer EGR dargestellt, der ausgangsseitig mit beiden Mikrocomputern MC1 und MC2 verbunden ist. Da es für die Erläuterung der erfindungsgemäßen Zusatzschaltung unerheblich ist, in welcher Art die Mikrocomputer MC1, MC2 aufgebaut sind, ist im Hinblick auf eine bessere Übersichtlichkeit der Zeichnung auf die Darstellung näherer Einzelheiten verzichtet worden. Für eine Vielzahl von Ausgängen ist ein Ausgangssignalumsetzer AR dargestellt. Dieser hat die Aufgabe, eine bestimmte, vom Mikrocomputer MC1 ausgegebene Information über eine Leitung L1 an den zu steuernden Prozeß weiterzugeben. Die Weitergabe darf nur dann erfolgen, wenn kein Abschaltsignal AL vorliegt. Dieses wird stets dann ausgelöst, wenn im Rahmen von Prüfvorgängen, für die eine Vielzahl von Vergleichern VR1, VR2 usw. bis VRn vorgesehen ist, festgestellt wurde, daß ein Informationspaar, beispielsweise auf den Leitungen L2 und L3 nicht ordnungsgemäß ist. Je nach Vergleichertyp wird auf Äquivalenz oder aber auf Antivalenz geprüft. Zur Weiterleitung des Abschaltsignals AL sind die Ausund Eingänge der Vergleicher VR1, VR2 usw. bis VRn in Reihe geschaltet. Das Abschaltsignal AL kann auch dazu verwendet werden, eine für die Mikrocomputer MC1 und MC2 erforderliche Taktstromversorgungseinrichtung (nicht dargestellt) abzuschalten bzw. zusätzlich zum Unwirksamschalten des Ausgangssignalumsetzers AR einen anderen weiteren Abschaltvorgang auslösen.

Ein Rücksetzsignalgeber RR, der nach dem Schließen eines Tastenkontaktes TT ein Rücksetzsignal RL auslöst, ist erforderlich zum Vorbereiten des ordnungsgerechten Anlaufens des zweikanaligen Mikrocomputerschaltwerkes. Zu dem Zweck wird das Rücksetzsignal RL mindestens den beiden Mikrocomputern MC1 und MC2 zugeführt; unter Umständen ggf. auch den Vergleichern VR1, VR2 usw. bis VRn.

Zum Prüfen des ordnungsgerechten Anlaufens des zweikanaligen Fail-Safe-Mikrocomputerschaltwerkes ist eine Leitung L4 des Mikrocomputers MC2 mittelbar über ein Exclusiv-ODER-Glied ER mit dem zugehörigen Vergleicher VRn verbunden. Das Exclusiv-ODER-Glied ER arbeitet als steuerbarer Inverter dahingehend, daß eine Invertierung einer über die Leitung L4 zugeführten Information nur auf einer fest vorgegebenen Anzahl von Verarbeitungsschritten des Mikrocomputerschaltwerkes erfolgt. Diese schaltungstechnische Maßnahme könnte zusätzlich oder anstelle auch bei der Leitung L5 des Mikrocomputers MC2 vorgesehen werden oder aber im Zusammenhang mit einem der Ausgänge des Mikrocomputers MC1. Wesentlich ist, daß die erläuterte Invertierung für mindestens einen Vergleicher einseitig in nur einem Verarbeitungskanal erfolgt.

Während das Exclusiv-ODER-Glied ER über seinen Eingang ERI die zeitlich begrenzt invertierte Information erhält, ist der Eingang ER2 mit dem Ausgang $\overline{A}$ eines Zählers ZR verbunden. Ein Fortschalteingang +m dieses Zählers ZR ist mit dem Mikrocomputer MC2 verbunden zwecks Zuführung von Taktimpulsen T, welche die einzelnen Verarbeitungsschritte des Mikrocomputerschaltwerkes charakterisieren. Ein Rücksetzeingang R des Zählers ZR ist schließlich mit dem Ausgang des Rücksetzsignalgebers RR verbunden, so daß das Rücksetzsignal RL den Zähler ZR in eine definierte Grundstellung einstellen kann. Weiterhin weist der Zähler ZR einen Freigabeeingang F auf, der mit dem Ausgang A verbunden ist. In dieser Schaltung bewirkt der Zähler ZR beim Exclusiv-ODER-Glied ER, daß dieses zu Beginn einer fest vorgegebenen Anzahl von Verarbeitungsschritten während des Anlaufens des Mikrocomputerschaltwerkes als Inverter wirksam ist und nach der vorgegebenen Anzahl von Verarbeitungsschritten für den weiteren Betrieb keine Invertierung der über den Eingang ERI zugeführten Informationen vornimmt.

In nicht weiter dargestellten Funktionsgruppen des Mikrocomputers MC2 gespeicherte Prüfprogramme bewirken nun für die Zeit des Anlaufens des Mikrocomputerschaltwerkes, daß die über die Leitung L4 ausgegebenen Informationen auf der genannten fest vorgegebenen Anzahl von Verarbeitungsschritten eine Invertierung vorgenommen wird, die jedoch durch den Betrieb des Exclusiv-ODER-Gliedes ER wieder aufgehoben wird. Somit macht sich die zeitweilige wertmäßige Änderung der Information in einem Kanal beim Vergleicher VRn nicht bemerkbar, solange nicht unzulässige Startbedingungen in beiden Mikrocomputern MCI und MC2 vorliegen. Zu diesen unzulässigen Startbedingungen gehören unter anderem ein identisch fehlerhafter Verarbeitungsstart beider Mikrocomputer MC1 und MC2 in einem unzulässigen Programmteil.

Wenn nun infolge einer Unregelmäßigkeit beim Anlaufen des zweikanaligen Fail-Safe-Mikrocomputerschaltwerkes auf mindestens einem Verarbeitungsschritt die über die Leitung L4 ausgegebene Information durch den Mikrocomputer MC2 nicht invertiert wird, wird dies durch den auf Äquivalenz prüfenden Vergleicher VRn bemerkt, da die diesem zugeführte Information ja durch das Exclusiv-ODER-Glied ER invertiert wird; die entsprechende Information des Mikrocomputers MC1 jedoch nicht. Das Erkennen der aufgezeigten Diskrepanz führt unweigerlich zur Ausgabe des Abschaltsignals AL.

Anstelle des Zählers ZR kann durchaus in vorteilhafter Weise auch ein analog arbeitendes Zeitglied eingesetzt werden, welches entsprechend der Dauer der fest vorgegebenen Anzahl aufeinanderfolgender Verarbeitungsschritte dimensioniert wird.

**Patentansprüche**

1. Schaltungsanordnung zum Prüfen des ordnungsgerechten Anlaufens eines zweikanaligen Fail-Safe-Mikrocomputerschaltwerkes, insbesondere für Eisenbahnsicherungsanlagen, mit in zwei Kanälen dieselben Informationen verarbeitenden Mikrocomputern, deren Signale Bit für Bit in einer Vielzahl von Vergleichern geprüft werden, wobeinur bei vollständiger, dauernder Ordnungsmäßigkeit aller Bit-Paare kein Abschaltvorgang ausgelöst wird, und Speicher für Prüfprogramme vorgesehen sind, die mindestens im Zeitraum des Anlaufens des Mikrocomputerschaltwerkes zu Testzwecken eingesetzt sind, dadurch gekennzeichnet, daß nach dem Anlaufen des Mikrocomputerschaltwerkes mindestens die für einen Vergleicher (VRn) von dem einen Kanal (MC2) vorgesehene Information auf einer fest vorgegebenen Anzahl aufeinanderfolgender Verarbeitungsschritte per Prüfprogramm invertiert über einen steuerbaren Inverter (ER) zugeführt sind, und daß Schaltmittel (ZR) vorgesehen sind, die zu Beginn der vorgegebenen Anzahl von Verarbeitungsschritten den Inverter (ER) wirksam schalten und nach der vorgegebenen Anzahl von Verarbeitungsschritten wieder unwiam schalten.

2. Schaltungsanordnung nach Anspruch 1, dadurch gekennzeichnet, daß dem Vergleicher (VRn) als steuerbarer Inverter ein Exclusiv-ODER-Glied (ER) zugeordnet ist, von dem ein Eingang (ER2) mit dem Ausgang $\overline{A}$ eines die vorgegebene Anzahl von Verarbeitungsschritten bestimmenden Zählers (ZR) verbunden ist, der bei einem für mehrere Schaltungsteile des Mikrocomputerschaltwerkes vor dem Anlaufen vorgesehenen Rücksetzsignal (RL) einschaltbar und durch die die Verarbeitungsschritte charakterisierenden Taktimpulse (T) fortschaltbar ist.

**Revendications**

1. Montage pour contrôler le démarrage correct d'une unité à micro-ordinateurs à sécurité intégrée, à deux canaux, notamment pour des installations de sécurité des chemins de fer, comportant des micro-ordinateurs qui traitent les mêmes informations dans deux canaux et dont les signaux sont contrôlés, bit-par-bit, dans une multiplicité de comparateurs, et dans lequel aucune opération de branchement n'est déclenchée que dans le cas d'une conformité complète et permanente de tous les couples de bits, et il est prévu des mémoires pour les programmes de contrôle, qui sont utilisés à des fins d'essai, au moins pendant la durée du démarrage de l'unité à micro-ordinateurs, caractérisé par le fait qu'après le démarrage de l'unité à micro-ordinateurs, au moins l'information prévue pour un comparateur (VRn) d'un canal (MC2) est soumise, après avoir été inversée par l'intermédiaire d'un inverseur commandable (ER), à un nombre, prédéterminé de façon fixe, de pas successifs de traitement pour chaque programme d'essai, et qu'il est prévu des moyens de commutation (ZR), qui activent l'inverseur (ER) au début du nombre prédéterminé de pas de traitement et rendent à nouveau inactif l'inverseur au bout du nombre prédéterminé de pas de traitement.

2. Montage suivant la revendication 1, caractérisé par le fait qu'au comparateur (VRn) est associé, en tant qu'inverseur commandable, un circuit OU-Exclusif (ER), dont une entrée (ER2) est reliée à la sortie $\overline{A}$ d'un compteur (ZR), qui détermine le nombre prédéterminé de pas de traitement, peut être branché lors de l'apparition d'un signal de remise à l'état initial (RL) prévu avant le démarrage, pour plusieurs éléments de circuit de l'unité à micro-ordinateurs, et peut être avancé par les impulsions de cadence (T) caractérisant les pas de traitement.

**Claims**

1. Circuit arrangement for testing the in-sequence start-up of a duel-channel fail-safe microcomputer sequential logic system, in particular for railway security equipment, having microcomputers which process the same information on two channels, the signals of which microcomputers are tested bit by bit in a plurality of comparators, no switch-off being triggered only in the event of complete, continuous correct sequencing of all bit pairs, and memories for test programmes being provided which are used at least during the time of the start-up of the microcomputer sequential logic system for test purposes, characterized in that after the start-up of the microcomputer sequential logic system at least the information provided by the one channel (MC2) for a comparator (VRn) is fed in a fixed predetermined number of successive processing steps per test programme, inverted by means of a controllable inverter (ER), and in that switching means (ZR) are provided which, at the beginning of the predetermined number of processing steps, activate the inverter (ER) and deactivate it again after the predetermined number of processing steps.

2. Circuit arrangement according to Claim 1, characterized in that the comparator (VRn) has associated with it as a controllable inverter an exclusive OR member (ER), one input (ER2) of which is connected to the output $\overline{A}$ of a counter (ZR) which determines the predetermined number of processing steps, which counter, in the event of one reset signal (RL) provided for a plurality of circuit parts of the microcomputer sequential logic system before the start-up, can be switched on and incremented by the clock pulses (T) characterizing the processing steps.